# EUROPEAN PATENT APPLICATION

(11) **EP 4 685 366 A1**
(43) Date of publication of application: **28.01.2026**
(21) Application number: 24791667.9
(22) Date of filing: 10.01.2024
(51) Int. Cl.: F16H 57/02, F16H 57/04

(54) **POWERTRAIN AND ELECTRIC VEHICLE**

(30) Priority: 17.04.2023 CN 202320967664 U
(71) Applicant: Huawei Digital Power Technologies Co., Ltd., Shenzhen, Guangdong 518043 (CN)
(72) Inventor: REN, Mengtian, Shenzhen, Guangdong 518043 (CN); LIU, Sujun, Shenzhen, Guangdong 518043 (CN); MA, Wenhai, Shenzhen, Guangdong 518043 (CN)
(74) Representative: Maiwald GmbH
(86) International application number: PCT/CN2024/071479
(87) International publication number: WO 2024/217079

(57) **Abstract**

This application provides a powertrain and an electric vehicle. The powertrain includes a housing, an oil baffle, and at least one gear. The oil baffle and the at least one gear are disposed inside the housing. The oil baffle includes a radial oil baffle and an axial oil baffle. The radial oil baffle is arranged between the housing and one gear in a radial direction of the gear, and a projection of the radial oil baffle in an axial direction of the gear is arc-shaped. The axial oil baffle is arranged between the housing and one gear in an axial direction of the gear, and a projection of the axial oil baffle in the axial direction of the gear is fan arc-shaped. When one gear in the housing stirs oil for lubrication inside the housing, the oil baffle can form barriers between the housing and the gear respectively in a radial direction and an axial direction of the gear, so that when the gear in the powertrain rotates, an excessively large drag loss is not caused by stirring excessive oil. Therefore, a loss of the powertrain can be reduced.

## Description

This application claims priority to Chinese Patent Application No. 202320967664.X, filed with the China National Intellectual Property Administration on April 17, 2023 and entitled "POWERTRAIN AND ELECTRIC VEHICLE", which is incorporated herein by reference in its entirety.

### TECHNICAL FIELD

This application relates to the field of electric vehicles, and more specifically, to a powertrain and an electric vehicle.

### BACKGROUND

A powertrain is an important component of a vehicle, and the powertrain includes a reducer. A function of the reducer is to perform deceleration and torque amplification on a driving force output by the powertrain system and then transfer a driving force to a driving wheel, to drive the vehicle to travel. At present, lubrication of internal bearings and gears of the reducer is mainly implemented by rotating the gears to stir oil and make the oil splash inside a housing. However, in a process of stirring the oil by the gears, an eddy current is formed in a gap of the housing, resulting in a drag loss.

Therefore, a powertrain and an electric vehicle are urgently needed to reduce losses of the powertrain and the electric vehicle.

### SUMMARY

This application provides a powertrain and an electric vehicle, to reduce losses of the powertrain and the electric vehicle.

According to a first aspect, a powertrain is provided, where the powertrain includes a housing, an oil baffle, and at least one gear. The oil baffle and the at least one gear are disposed inside the housing. The oil baffle includes a radial oil baffle and an axial oil baffle. The radial oil baffle is arranged between the housing and one gear in a radial direction of the gear, and a projection of the radial oil baffle in an axial direction of the gear is arc-shaped. The axial oil baffle is arranged between the housing and one gear in an axial direction of the gear, and a projection of the axial oil baffle in the axial direction of the gear is fan arc-shaped.

Based on this technical solution, when one gear in the housing stirs oil for lubrication inside the housing, the oil baffle can form barriers between the housing and the gear respectively in a radial direction and an axial direction of the gear, so that when the gear in the powertrain rotates, an excessively large drag loss is not caused by stirring excessive oil. Therefore, a loss of the powertrain can be reduced.

With reference to the first aspect, in some implementations of the first aspect, the oil baffle is centrosymmetric relative to a connection line between a center of one gear and a lowest point of the housing, and the lowest point of the housing is a point that is farthest away from the center of the gear and that is on an inner side surface of the housing.

Based on this technical solution, the oil baffle is disposed centrosymmetric relative to the connection line between the center of the gear and the lowest point of the housing. To be specific, the oil baffle may be disposed at a position with a large gap between the gear and the housing, and more oil can be accumulated in the gap. The oil baffle is disposed at the position, so that a drag loss caused by the gear stirring the oil accumulated in the gap can be reduced. Therefore, a loss of the powertrain is reduced.

With reference to the first aspect, in some implementations of the first aspect, a side that is of the radial oil baffle and that faces away from the gear includes a mounting base. The mounting base is configured to fasten an adsorption apparatus, and the adsorption apparatus is configured to adsorb impurities in the housing.

Based on this technical solution, the adsorption apparatus is disposed on the oil baffle, so that impurities formed during working of the powertrain can be adsorbed. Therefore, working performance of the powertrain can be improved.

With reference to the first aspect, in some implementations of the first aspect, the mounting base is of an open cavity structure, and an opening of the mounting base faces away from the gear.

Based on this technical solution, the opening of the mounting base faces away from one gear, so that the adsorption apparatus can be easily fastened in the mounting base. Therefore, assembly difficulty of the powertrain can be reduced.

With reference to the first aspect, in some implementations of the first aspect, the mounting base is provided with a through hole. The through hole is located on a side that is of the mounting base and that faces away from the radial oil baffle.

Based on this technical solution, the through hole can increase a contact area between the adsorption apparatus and the oil, and can improve adsorption efficiency of the adsorption apparatus. Therefore, working performance of the powertrain can be further improved.

With reference to the first aspect, in some implementations of the first aspect, the mounting base is centrosymmetric relative to the connection line between the center of the gear and the lowest point of the housing.

Based on this technical solution, the mounting base may be disposed at a position with a large gap between the gear and the housing. To be specific, the adsorption apparatus fastened in the mounting base can be in full contact with the oil accumulated in the gap. Therefore, adsorption efficiency and working performance of the powertrain can be further improved.

With reference to the first aspect, in some implementations of the first aspect, a material of the adsorption apparatus is a magnetic material.

Based on this technical solution, the adsorption apparatus made of the magnetic material can adsorb impurities such as iron scraps that are formed when the powertrain works. Therefore, working performance of the powertrain can be improved.

With reference to the first aspect, in some implementations of the first aspect, the housing includes a first half housing and a second half housing, and the first half housing and the second half housing are disposed opposite to each other in an axial direction of one gear. Space formed by the first half housing and the second half housing is for accommodating a gear assembly and the oil baffle. The first oil baffle is fastened to the first half housing, and the second oil baffle is fastened to the second half housing.

Based on this technical solution, the first oil baffle and the second oil baffle may be respectively fastened to the first half housing and the second half housing. When the first half housing and the second half housing are disposed opposite to each other along an axis of the gear, the first oil baffle and the second oil baffle can wrap the gear in the radial direction and the axial direction of the gear. Therefore, assembly process difficulty of the powertrain can be reduced.

With reference to the first aspect, in some implementations of the first aspect, the housing includes a first half housing and a second half housing, and the first half housing and the second half housing are disposed opposite to each other in the axial direction of the gear. Space formed by the first half housing and the second half housing is for accommodating a gear assembly and the oil baffle. The first oil baffle and the second oil baffle are both fastened to the first half housing or the second half housing.

Based on this technical solution, both the first oil baffle and the second oil baffle may be fastened to one of the half housings. The half housing and the gear are assembled, so that the first oil baffle and the second oil baffle wrap the gear in the radial direction and the axial direction of the gear. Therefore, assembly process difficulty of the powertrain can be reduced.

With reference to the first aspect, in some implementations of the first aspect, the at least one gear includes a main gear, a primary gear, and a secondary gear, and the oil baffle is centrosymmetric relative to a connection line between a center of the main gear and the lowest point of the housing.

Based on this technical solution, the oil baffle is centrosymmetric relative to the connection line between the center of the main gear and the lowest point of the housing. In other words, the oil baffle may be disposed between the main gear with a large size in the at least one gear and the housing, so that when the main gear of the powertrain stirs oil, the oil baffle can form a barrier to reduce a loss of the powertrain.

With reference to the first aspect, in some implementations of the first aspect, a gap exists between the radial oil baffle and the housing.

Based on this technical solution, a gap in which oil can be accumulated exists between the radial oil baffle and the housing. When the gear in the powertrain rotates, the oil splashes to lubricate the gear, so that working performance of the powertrain can be improved.

According to a second aspect, an electric vehicle is provided. The electric vehicle includes the powertrain according to the first aspect or the implementations of the first aspect.

For descriptions of technical effects of the second aspect, refer to related descriptions in the first aspect. Details are not described herein again.

### BRIEF DESCRIPTION OF DRAWINGS

FIG. 1 is a schematic diagram of a structure of a powertrain according to an embodiment of this application;
FIG. 2 and FIG. 3 are exploded views of a powertrain according to an embodiment of this application from different angles;
FIG. 4 is a schematic three-dimensional diagram of an oil baffle according to an embodiment of this application;
FIG. 5 and FIG. 6 are partial schematic diagrams of two opposite sections of a powertrain according to an embodiment of this application; and
FIG. 7 is a schematic diagram of a structure of an electric vehicle according to an embodiment of this application.

Reference numerals: housing 10; at least one gear 20; oil baffle 30; first half housing 11; second half housing 12; main gear 21; primary gear 22; secondary gear 23; first oil baffle 31; second oil baffle 32; axial oil baffle 311/321; radial oil baffle 312/322; first mounting base 313; and second mounting base 323.

### DESCRIPTION OF EMBODIMENTS

The following describes technical solutions of this application with reference to accompanying drawings.

It should be noted that, in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in descriptions of embodiments of this application, "a plurality of" means two or more, and "at least one" and "one or more" mean one, two, or more. The singular expression forms "one", "a", "the", "the foregoing", "this", and "the one" are also intended to include an expression form such as "one or more" unless the opposite is explicitly indicated in the context thereof.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

In descriptions of embodiments of this application, an orientation or a position relationship indicated by the terms "up", "down", "left", "right", "vertical", "horizontal", and the like is defined relative to an orientation or a position at which a component is schematically placed in the accompanying drawings. It should be understood that these directional terms are relative concepts, and are used for relative description and clarification, instead of indicating or implying that a specified apparatus or component needs to have a specific orientation, or being constructed and operated in a specific orientation. The directional terms may correspondingly vary based on a change of an orientation in which a component is placed in the accompanying drawings. Therefore, this shall not be construed as a limitation on this application.

In embodiments of this application, a same reference numeral represents a same component or a same part. In addition, the parts in the accompanying drawings are not drawn to a proportion, and sizes of the parts shown in the figures are merely examples, and should not be construed as a limitation on this application.

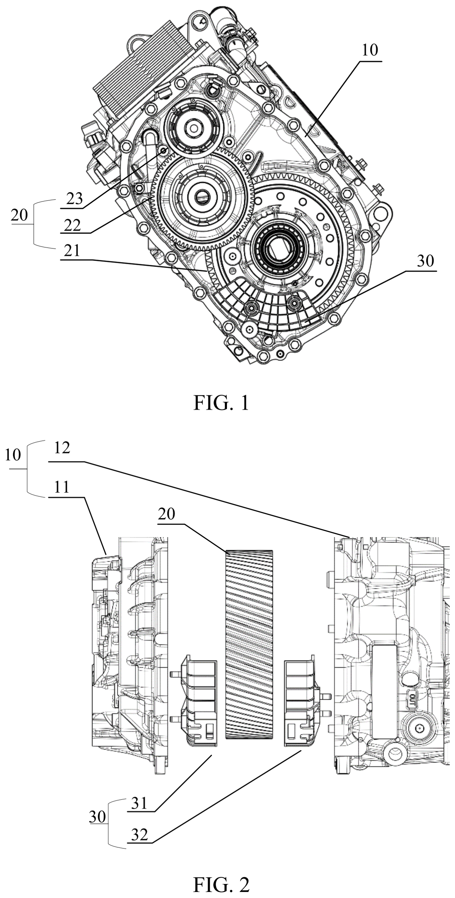

At present, in a process of stirring oil by a gear in a powertrain, an eddy current is formed in a gap of a housing, so that the powertrain has a large drag loss. Embodiments of this application provide a powertrain. An oil baffle is disposed between a gear and a housing, so that the oil baffle forms barriers between the housing and the gear respectively in a radial direction and an axial direction of the gear. Therefore, a loss of the powertrain is reduced. The following describes in detail a powertrain provided in an embodiment of this application with reference to FIG. 1.

FIG. 1 is a schematic diagram of a structure of a powertrain according to an embodiment of this application.

The powertrain includes a housing 10, an oil baffle 30, and at least one gear 20. The oil baffle 30 and the at least one gear 20 are disposed inside the housing 10. The oil baffle 30 includes a radial oil baffle and an axial oil baffle. The radial oil baffle is arranged between the housing 10 and one gear in a radial direction of the gear, and a projection of the radial oil baffle in an axial direction of the gear is arc-shaped. The axial oil baffle is arranged between the housing 10 and one gear in an axial direction of the gear, and a projection of the axial oil baffle in the axial direction of the gear is fan arc-shaped. When one gear in the housing 10 stirs oil for lubrication inside the housing 10, the oil baffle 30 can form barriers between the housing 10 and the gear respectively in a radial direction and an axial direction of the gear, so that when the gear in the powertrain rotates, an excessively large drag loss is not caused by stirring excessive oil. Therefore, a loss of the powertrain can be reduced.

It should be noted that, although not shown in the figure, the powertrain provided in this embodiment of this application may further include other apparatuses, for example, parts such as a motor, an input shaft assembly, an output shaft assembly, an intermediate shaft assembly, and a bearing. This is not particularly limited in this application.

It should be further noted that the housing 10, the at least one gear 20, and the oil baffle 30 shown in FIG. 1 may be considered as main components of a reducer in the powertrain.

The at least one gear 20 in the powertrain provided in this embodiment of this application may be designed based on a specific usage scenario. For example, the at least one gear 20 may include a main gear 21, a primary gear 22, and a secondary gear 23. Relative positions of the main gear 21, the primary gear 22, and the secondary gear 23 may be shown in FIG. 1, and the main gear 21, the primary gear 22, and the secondary gear 23 may rotate relative to each other. For example, the main gear 21 may be connected to the output shaft assembly, and the primary gear 22 and the secondary gear 23 may be connected to the input shaft assembly and the intermediate shaft assembly respectively. An input shaft may be connected to a power mechanism, an output shaft may be connected to a transmission mechanism, and the three gear assemblies may decelerate the transmission mechanism through rotating.

In this embodiment of this application, a placement position of the oil baffle 30 may be associated with a structure of the at least one gear 20 and the housing 10. For example, the oil baffle 30 is centrosymmetric relative to a connection line between a center of one gear and a lowest point of the housing, and the lowest point of the housing is a point that is farthest away from the center of the gear and that is on an inner side surface of the housing 10. In other words, the oil baffle 30 may be disposed at a position with a large gap between the gear and the housing 10, and more oil can be accumulated in the gap. The oil baffle 30 is disposed at the position, so that a drag loss caused by the gear stirring the oil accumulated in the gap can be reduced. Therefore, a loss of the powertrain is reduced.

It should be noted that, when the powertrain is used in an electric vehicle, the lowest point of the housing may be a lowest point when the powertrain is placed in the electric vehicle. Therefore, when the oil in the housing 10 is deposited at the lowest point of the housing due to a gravity factor, the oil baffle 30 can isolate the lowest point of the housing from the gear. Therefore, the drag loss can be reduced and use performance of the powertrain is improved.

The oil baffle 30 in this embodiment of this application may be disposed in a radial direction and an axial direction of any gear. For example, as shown in FIG. 1, the oil baffle 30 may be arranged between the main gear 21 and the housing 10 in a radial direction and an axial direction respectively. In other words, the oil baffle 30 may be disposed between the main gear 21 with a large size in the at least one gear 20 and the housing 10, so that when the main gear 21 of the powertrain stirs the oil, the oil baffle can form a barrier to reduce the loss of the powertrain. For ease of description, the following further describes the powertrain provided in this application by using an example in which the oil baffle 30 is disposed between the main gear 21 and the housing 10.

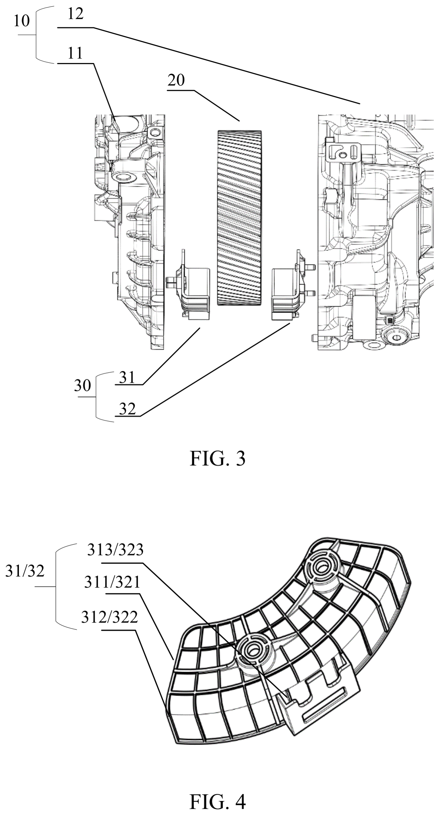

FIG. 2 and FIG. 3 are exploded views of a powertrain according to an embodiment of this application from different angles. Refer to FIG. 2 and FIG. 3. This application may include two oil baffles, which are respectively referred to as a first oil baffle 31 and a second oil baffle 32 for ease of description and differentiation. For example, the first oil baffle 31 and the second oil baffle 32 may have a same structure, and are centrosymmetric relative to the center of the main gear 21 and the lowest point of the housing.

It may be understood that the first oil baffle 31 and the second oil baffle 32 each include a radial oil baffle and an axial oil baffle. As shown in FIG. 2 and FIG. 3, a projection of a radial oil baffle part of the first oil baffle 31 in an axial direction of the main gear 21 is arc-shaped, and a projection of an axial oil baffle of the first oil baffle 31 in the axial direction of the main gear 21 is fan arc-shaped. The second oil baffle 32 is symmetric to the first oil baffle 31, and details are not described herein again.

The oil baffle 30 in this embodiment of this application may be fastened to the housing 10 in a plurality of manners, and the fastening manner may be related to a structure of the housing 10. For example, the housing 10 may be of a split structure. For example, the housing 10 includes a first half housing 11 and a first half housing 12. The first half housing 11 and the first half housing 12 are disposed opposite to each other in an axial direction of a gear. Space formed by the first half housing 11 and the first half housing 12 is for accommodating a gear assembly and the oil baffle 30. In a possible implementation, as shown in FIG. 2 and FIG. 3, the first oil baffle 31 is fastened to the first half housing 11, and the second oil baffle 32 is fastened to the first half housing 12. When the first half housing 11 and the first half housing 12 are disposed opposite to each other along an axis of the gear, the first oil baffle 31 and the second oil baffle 32 can wrap the gear in the radial direction and the axial direction of the gear. Therefore, assembly process difficulty of the powertrain can be reduced. In another possible implementation, the first oil baffle 31 and the second oil baffle 32 are both fastened to the first half housing 11 or the first half housing 12. The half housing and the gear are assembled, so that the first oil baffle 31 and the second oil baffle 32 wrap the gear in the radial direction and the axial direction of the gear. Therefore, assembly process difficulty of the powertrain can also be reduced.

It should be noted that the powertrain may further include another half housing. This is not particularly limited in this application. For example, when the housing 10 of the powertrain includes a left housing, an intermediate housing, and a right housing, the first half housing 11 and the first half housing 12 may be respectively two of the left housing, the intermediate housing, and the right housing, for example, the left housing and the intermediate housing.

In addition, the axial oil baffle in the first oil baffle 31 and the second oil baffle 32 may be fastened to the housing 10. A connection manner between the oil baffle 30 and the housing 10 is not particularly limited in this application. For example, the oil baffle 30 and the housing 10 may be connected by using one or more bolts, or may be connected by using a bonding technology. For example, the oil baffle 30 in FIG. 1 has two bolt holes, and the oil baffle 30 can be fastened to the housing 10 by using the two bolt holes. A powertrain assembly process is simple and easy to implement.

A gap may exist between the radial oil baffle in the first oil baffle 31 and the second oil baffle 32 and the housing 10. In other words, a gap in which oil can be accumulated exists between the radial oil baffle and the housing 10. When the gear in the powertrain rotates, the oil splashes to lubricate the gear, so that working performance of the powertrain can be improved.

The foregoing describes a possible placement position of the oil baffle 30, and the following describes a structure of the oil baffle 30. The structure of the oil baffle 30 may be designed based on a structure of the powertrain.

FIG. 4 is a schematic three-dimensional diagram of the first oil baffle 31 or the second oil baffle 32. Because the first oil baffle 31 and the second oil baffle 32 are of a symmetric structure, for brevity, the following uses the first oil baffle 31 as an example for description. A projection of a radial oil baffle 312 part of the first oil baffle 31 in an axial direction of the main gear 21 is arc-shaped, and a projection of an axial oil baffle 311 of the first oil baffle 31 in the axial direction of the main gear 21 is fan arc-shaped. For example, the first oil baffle 31 may be bent-shaped. Two sides of a bent part of the first oil baffle 31 are the axial oil baffle 311 and the radial oil baffle 312 respectively. The axial oil baffle 311 may be planar plate-shaped, the radial oil baffle 312 may be arc plate-shaped, and a radian of the radial oil baffle 312 may be the same as a radian of the main gear 21. An inner angle at the bent part of the first oil baffle 31 may be at a specific angle, for example, at an arc angle of approximately 90 degrees. A structure of the second oil baffle 32 is similar to that of the first oil baffle 31, and details are not described herein again.

When the first oil baffle 31 and the second oil baffle 32 are symmetrically disposed along two sides of the gear, the radial oil baffle 312 of the first oil baffle 31 is flush with the radial oil baffle 322 of the second oil baffle 32. The radial oil baffle 312 of the first oil baffle 31 and the radial oil baffle 322 of the second oil baffle 32 may be in contact or may have a gap. For example, first oil baffle 31 and the second oil baffle 32 may form a U-shaped structure without a gap, or may form a U-shaped structure with a gap in the middle. If a gap exists between the radial oil baffle 312 of the first oil baffle 31 and the radial oil baffle 322 of the second oil baffle 32, a small quantity of oil can pass through the gap, so that the at least one gear 20 of the powertrain is fully lubricated.

In this embodiment of this application, a mounting base for placing an adsorption apparatus may be disposed on the oil baffle 30. The following describes this. For example, a side that is of the radial oil baffle and that faces away from one gear includes a mounting base. For example, refer to FIG. 4. The mounting base may include a first mounting base 313 and a second mounting base 323. The radial oil baffle 312 of the first oil baffle 31 includes the first mounting base 313, and the radial oil baffle 322 of the second oil baffle 32 includes the second mounting base 323. Alternatively, one of the radial oil baffle 312 or the radial oil baffle 322 includes a mounting base. For simplicity, the following describes one of the mounting bases in detail. The mounting base is configured to fasten an adsorption apparatus, and the adsorption apparatus is configured to adsorb impurities in the housing 10. The adsorption apparatus is disposed on the oil baffle 30, so that impurities formed during working of the powertrain can be adsorbed. Therefore, working performance of the powertrain can be improved.

A material of the adsorption apparatus in this embodiment of this application may be a magnetic material, for example, a magnet block. The adsorption apparatus made of the magnetic material can adsorb impurities such as iron scraps that are formed when the powertrain works. Therefore, working performance of the powertrain can be improved.

A structure of the mounting base is not particularly limited in this application. For example, the mounting base may be of an open cavity structure, and an opening of the mounting base faces away from one gear. For example, as shown in FIG. 4, the mounting base may be in a form of buckle base. The mounting base includes three side surfaces and one bottom surface, which are enclosed by a surface of the oil baffle 30 on which the mounting base is located to form an open cavity structure. The adsorption apparatus may be fastened to a cavity of the mounting base through the opening. The opening of the mounting base faces away from one gear, so that the adsorption apparatus can be easily fastened in the mounting base. Therefore, assembly difficulty of the powertrain can be reduced.

For example, the mounting base may be centrosymmetric relative to a connection line between a center of one gear and a lowest point of the housing. In other words, the mounting base may be disposed at a position with a large gap between the gear and the housing 10. To be specific, the adsorption apparatus fastened in the mounting base can be in full contact with the oil accumulated in the gap. Therefore, adsorption efficiency and working performance of the powertrain can be further improved.

The mounting base may be further provided with a through hole. The through hole can increase a contact area between the adsorption apparatus and the oil, and can improve adsorption efficiency of the adsorption apparatus. Therefore, working performance of the powertrain can be further improved. For example, the through hole is located on a side that is of the mounting base and that faces away from the radial oil baffle 30, for example, the bottom surface of the mounting base.

It should be noted that the first oil baffle 31 and the second oil baffle 32 in this embodiment of this application may be designed in an integrated manner. For example, the radial oil baffle, the axial oil baffle, and the mounting base on the radial oil baffle of the first oil baffle 31 may be of an integrated structure that does not need to be assembled, so that structural stability of the powertrain can be improved and assembly difficulty of the powertrain can be reduced.

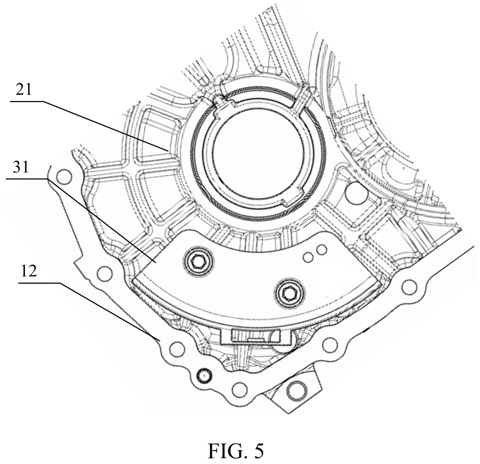

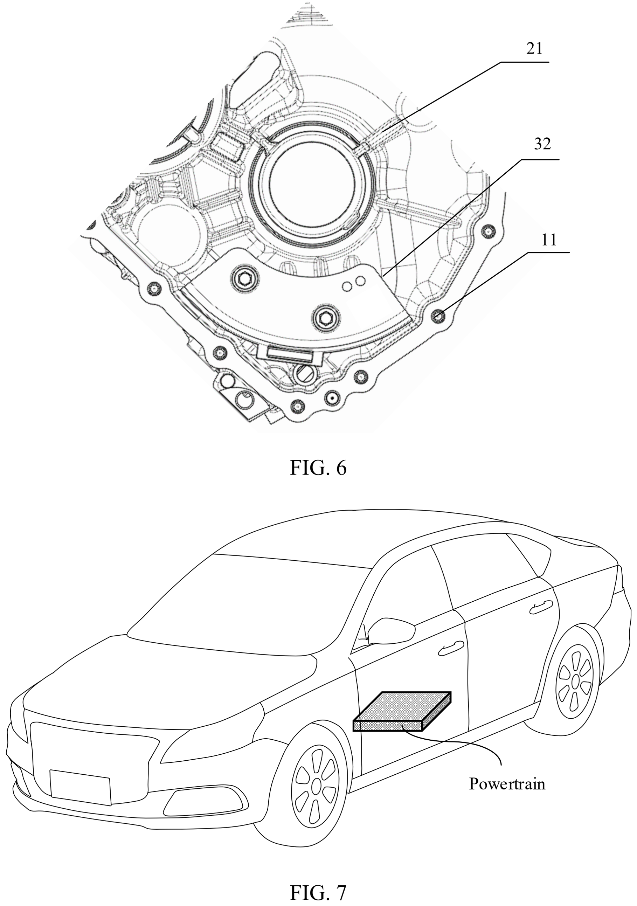

For ease of understanding of embodiments of this application, FIG. 5 and FIG. 6 are partial schematic diagrams of two opposite sections of a powertrain. FIG. 5 is a sectional view of the powertrain that is shown in FIG. 3 and that includes a first oil baffle 31 from left to right. The first oil baffle 31 is fastened to a first half housing 11 (not shown in FIG. 5) and is separately disposed in a radial direction and an axial direction of a main gear 21. FIG. 6 is a sectional view of the powertrain that is shown in FIG. 3 and that includes a second oil baffle 32 from right to left. The second oil baffle 32 is fastened to a first half housing 12 (not shown in FIG. 6) and is separately disposed in a radial direction and an axial direction of a main gear 21. The first oil baffle 31 and the second oil baffle 32 are symmetrically disposed along the main gear 21.

An embodiment of this application further provides an electric vehicle, for example, a pure electric vehicle, an extended-range electric vehicle, a hybrid electric vehicle, a fuel cell vehicle, or a new energy vehicle. The electric vehicle includes a motor and the reducer described in the foregoing embodiment. The motor may be configured to provide a driving force for the electric vehicle.

FIG. 7 is a schematic diagram of a structure of an electric vehicle according to an embodiment of this application. The electric vehicle may include the foregoing reducer. For example, the electric vehicle may include a road vehicle, a water vehicle, an air vehicle, an industrial device, an agricultural device, an entertainment device, or the like. For example, the vehicle is a vehicle in a broad sense, and may be a vehicle (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in this embodiment of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A powertrain, comprising a housing, an oil baffle, and at least one gear, wherein the oil baffle and the at least one gear are disposed inside the housing, and the oil baffle comprises a radial oil baffle and an axial oil baffle, wherein
the radial oil baffle is arranged between the housing and one gear in a radial direction of the gear, and a projection of the radial oil baffle in an axial direction of the gear is arc-shaped; and
the axial oil baffle is arranged between the housing and one gear in an axial direction of the gear, and a projection of the axial oil baffle in the axial direction of the gear is fan arc-shaped.

2. The powertrain according to claim 1, wherein the oil baffle is centrosymmetric relative to a connection line between a center of one gear and a lowest point of the housing, and the lowest point of the housing is a point that is farthest away from the center of the gear and that is on an inner side surface of the housing.

3. The powertrain according to claim 1 or 2, wherein a side that is of the radial oil baffle and that faces away from the gear comprises a mounting base, the mounting base is configured to fasten an adsorption apparatus, and the adsorption apparatus is configured to adsorb impurities in the housing.

4. The powertrain according to claim 3, wherein the mounting base is of an open cavity structure, and an opening of the mounting base faces away from the gear.

5. The powertrain according to claim 3, wherein the mounting base is provided with a through hole, and the through hole is located on a side that is of the mounting base and that faces away from the radial oil baffle.

6. The powertrain according to claim 3, wherein the mounting base is centrosymmetric relative to the connection line between the center of the gear and the lowest point of the housing.

7. The powertrain according to claim 3, wherein a material of the adsorption apparatus is a magnetic material.

8. The powertrain according to claim 1 or 2, wherein the oil baffle comprises a first oil baffle and a second oil baffle, and the first oil baffle and the second oil baffle are respectively at two sides of one gear in an axial direction of the gear.

9. The powertrain according to claim 8, wherein the housing comprises a first half housing and a second half housing, the first half housing and the second half housing are disposed opposite to each other in the axial direction of the gear, space formed by the first half housing and the second half housing is for accommodating the gear assembly and the oil baffle, the first oil baffle is fastened to the first half housing, and the second oil baffle is fastened to the second half housing.

10. The powertrain according to claim 8, wherein the housing comprises a first half housing and a second half housing, the first half housing and the second half housing are disposed opposite to each other in the axial direction of the gear, space formed by the first half housing and the second half housing is for accommodating the gear assembly and the oil baffle, and the first oil baffle and the second oil baffle are both fastened to the first half housing or the second half housing.

11. The powertrain according to claim 2, wherein the at least one gear comprises a main gear, a primary gear, and a secondary gear, and the oil baffle is centrosymmetric relative to a connection line between a center of the main gear and the lowest point of the housing.

12. The powertrain according to claim 1 or 2, wherein a gap exists between the radial oil baffle and the housing.

13. An electric vehicle, comprising the powertrain according to any one of claims 1 to 12.
